Europäisches Patentamt

European Patent Office

Office européen des brevets

(11) Publication number: **0 169 067 B1**

(12) # EUROPEAN PATENT SPECIFICATION

(45) Date of publication of patent specification: **25.09.91**   (51) Int. Cl.⁵: **C04B  35/65, C04B 35/10**

(21) Application number: **85305107.6**

(22) Date of filing: **17.07.85**

(54) Methods of making self-supporting ceramic materials.

(30) Priority: **20.07.84 US 632636**
**25.06.85 US 747788**

(43) Date of publication of application:
**22.01.86 Bulletin  86/04**

(45) Publication of the grant of the patent:
**25.09.91 Bulletin  91/39**

(84) Designated Contracting States:
**AT BE CH DE FR GB IT LI LU NL SE**

(56) References cited:
**US-A- 3 437 468**
**US-A- 3 473 987**

(73) Proprietor: **LANXIDE TECHNOLOGY COM-
PANY, LP.**
**Tralee Industrial Park**
**Newark Delaware 19711(US)**

(72) Inventor: **Newkirk, Marc Stevens**
**38 Quartz Mill Road**
**Newark Delaware 19711(US)**
Inventor: **Zwicker, Harry Richard**
**16 Ash lane**
**Elkton Maryland 21921(US)**

(74) Representative: **Andrae, Steffen, Dr. et al**
**DENNEMEYER & ASSOCIATES Balanstrasse
55**
**W-8000 München 90(DE)**

Rank Xerox (UK) Business Services

## Description

The present invention broadly relates to a method for producing a self-supporting ceramic structure and to such self-supporting ceramic structure as such if produced by such method. The ceramic structures produced in accordance with the process of the present invention possess a dense, polycrystalline microstructure which is unusually strong and fracture-tough as compared with conventional ceramics.

Ceramics have, in recent years, been increasingly considered as candidates for structural applications historically served by metals. The impetus for this substitution has been the superior properties of ceramics, such as corrosion resistance, hardness, modulus of elasticity, and refractory capabilities when compared with metals, coupled with the fact that the engineering limits of performance of many modern components and systems are now gated by these properties in conventionally employed materials. Examples of areas for such prospective substitution include engine components, heat exchangers, cutting tools, bearings and wear surfaces, pumps, and marine hardware.

However, the key to enabling the substitution of ceramics for metals in such structural applications has been the cost-effective development of improved strength and fracture toughness characteristics in ceramics to allow their reliable employment in design environments involving tensile loading, vibration, and impact. To date, the efforts to produce high strength, reliable monolithic ceramics have focused upon improved powder processing technologies, which, while indeed achieving an improvement in the state-of-the-art in ceramic performance characteristics, have been complicated and generally less that cost-effective. Emphasis in such conventional powder processing technologies has been in two areas:

1) improved methods of producing ultra-fine, uniform powder materials using sol-gel, plasma, and laser techniques, and 2) improved methods of densification and compaction, including superior sintering techniques, hot pressing and hot isostatic pressing. The objective of such efforts is to produce dense, fine-grained, flaw-free microstructures, and such methods have, in fact, produced improved structural performance capabilities in ceramics. However, the effect of these developments in conventional technologies, even though improved ceramic structures have resulted, has been to dramatically increase the cost of ceramics as a class of engineering materials.

Another limitation in ceramic materials engineering which is not only unsolved, but, in fact, is aggravated by modern ceramic processing improvements is scaling versatility. Conventional processes aimed at densification (i.e. removal of voids between powder particles) are incompatible with large one-piece structural application possibilities for ceramics, such as monolithic furnace liners, pressure shells, boiler and superheater tubes, etc. Problems of process residence time and compaction forces increase dramatically with increased part dimensions. Process equipment pressure chamber wall thicknesses (for hot isostatic pressing) and die dimensions (for hot pressing) increase geometrically with increased overall ceramic product dimensions.

Occasionally in the past, oxidation of metals has been contemplated as a conceptually attractive approach to the formation of an oxide-type ceramic body. As used herein and in the accompanying claims, the term "oxidation reaction product" is intended to mean any oxidized state of a metal whereby such metal has given up electrons to any other element or combination of elements to form a compound, and is intended to cover, for example, metal compounds with oxygen, nitrogen, the halogens, carbon, boron, selenium, tellurium, and combinations thereof, etc.

The reader may find it useful to review briefly what has been previously known about the general oxidation behavior of metals and the previous limited use of metal oxidation as a mechanism for generating ceramic bodies.

Metals classically oxidize in one of four general modes. First, some metals oxidize when exposed to an oxidizing environment to form an oxidation reaction product, which either flakes, spalls or is porous, such that the metal surface is continually exposed to the oxidizing environment. In such a process, a free-standing body is not formed as the metal oxidizes, but, rather, a mass of flakes or particles is formed. Iron, for example, reacts with oxygen so as to oxidize in such a manner.

Secondly, certain metals (e.g. aluminum, magnesium, chromium, nickel or the like) are known to oxidize in such a manner as to form a relatively thin, protective oxidation reaction product skin which transports either oxidant or metal at such a low rate that the underlying metal is effectively protected from further oxidation. This mechanism does not yield a free-standing structure of a thickness sufficient to exhibit any significant structural integrity.

Thirdly, certain other metals are known to form a solid or liquid oxidation reaction product film which does not protect the underlying parent metal because such reaction products permit the transport of oxidant therethrough. While an oxygen-permeable film may retard the oxidation rate of the underlying metal, the metal itself is not totally protected by the film due to oxidant-permeability thereof. An example of this latter type of oxidation occurs in the case of silicon, which, when exposed to air at elevated temperatures, forms a glassy skin of silicon dioxide which is permeable to oxygen. Typically these processes do not occur at nearly fast enough rates to produce a useful thickness of ceramic material.

Finally, other metals are known to form oxidation reaction products which, under formation conditions, volatilize and continually expose fresh metal to oxidation. Tungsten is an example of a metal which oxidizes in this manner when reacted with oxygen at high temperatures to form $WO_3$.

None of these classical oxidation modes offers significant potential for the formation of ceramic materials for the reasons cited. However, as a variation of the second mode described above, one can add fluxes to the surfaces of metals to dissolve or break up their oxidation reaction products and render them susceptible to oxidant or metal transport, allowing the development of thicker oxidation reaction product skins than might otherwise be naturally possible. Still, however, the capacity to form free-standing ceramic structures by such a technique is limited to thin sections of relatively limited strength. Such a technique may be employed on metal powders or oxidize their surfaces in admixture with other particulates to yield intrinsically porous low strength ceramics as described in US-A-3 255 027 to H. Talsma and US-A- 3 299 002 to W.A. Hare. Alternatively, similar methods may be used to produce thin walled $Al_2O_3$ refractory structures (US-A- 3 473 987 to D.R. Sowards and US-A- 3 473 938 to R.E. Oberlin) or thin walled hollow refractory particles (US-A- 3 298 842 to L. E. Seufert). However, a characteristic of such processes is the limited thickness of oxidation reaction product which is formed, apparently because the effect of a fluxing agent is of relatively short duration such that the oxidation reaction product reverts to a slow-growing, protective character after only a limited amount of growth. Increasing the flux concentration, to promote thicker ceramic skin growth, results in a lower strength, less refractory, lower hardness product and, therefore, is counter-productive.

One technique which has been successfully employed to create free-standing ceramics by the oxidation of metals involves an oxidation/reduction or "redox" type reaction. It has long been known that certain metals will reduce other metal oxides to form a new oxide and a reduced form of the original oxide. Use of such redox-type reactions to produce ceramic materials has been employed, for example, as described in US-A- 3 437 468 to L.E. Seufert and US-A- 973 977 to L.E. Wilson.

US-A-3 437 468 discloses a method for producing a ceramic composite consisting of magnesium aluminate spinel, alpha-alumina and a silicon-containing elemental phase by oxidation of molten aluminum with the solid oxidant magnesium silicate in the presence of air. Magnesium silicate is placed on the aluminum in the form of a thick layer which is three to four times as deep as the aluminum.

The present invention involves a unique technique for promoting a novel oxidation phenomenon which differs from any of the classical oxidation modes and which overcomes the difficulties and limitations of the existing processes for making ceramics.

It is the object of the present invention to provide a method for producing dense, high strength and fracture-tough ceramic structures which is simpler and lower in cost in comparison to the previously described conventional processes and which reliably allows producing large size and/or thick section ceramics without the need for using especially alloyed parent metals.

This object is achieved by a method for producing a self-supporting ceramic structure by oxidation of a liquid-phase parent metal with a vapor-phase oxidizing environment and formation of an oxidation reaction product which comprises (1) a ceramic phase consisting of the oxidation reaction product of said parent metal with the vapor-phase oxidant, and (2) a metallic phase consisting of one or more non-oxidized constituents of said parent metal, characterized in that the method comprises

(a) applying a layer of dopant material to at least one portion of a surface of a parent metal,

(b) placing the parent metal having the layer of dopant material applied thereto in a suitable refractory container with the parent metal surface carrying the layer of dopant material exposed to the oxidizing environment,

(c) heating the parent metal having the layer of dopant material applied thereto to a temperature above the melting point of the parent metal but below the melting point of its oxidation reaction product to render the parent metal in a liquid-phase and, at said temperature,

(d) reacting said liquid-phase parent metal with said vapor-phase oxidant to form said oxidation reaction product and

(e) maintaining at least one portion of the surface of the oxidation reaction product in contact with said oxidant to draw molten metal through the oxidation reaction product towards the oxidant to form an oxidation reaction product within an beyond the layer of dopant material, and

(f) continuing said reaction for a time sufficient to produce said ceramic structure.

The method of this invention is based upon the discovery that the distinctly novel and surprising oxidation behavior of a metal or metal alloy (hereinafter interchangeably referred to as the "parent metal") described in a related patent application EP-A- 155 831 (not prepublished) can be provoked by externally selectively doping (as shall be hereinafter described) said parent metal in those cases where appropriate surface energy relationships between the parent metal and its oxidation reaction product do not intrinsically exist, so as to create surface energy relationships which cause a preferred wetting phenomenon which permits transport of the parent metal through its reaction product. In EP-A- 155 831 it was believed that such appropriate surface energy relationships, where not intrinsically present between said parent metal and its oxidation reaction product, could only be beneficially altered by alloying one or more dopants into the parent metal. It has been surprisingly discovered in the present invention that such surface energy relationships can be induced by selectively applying one or more dopants to the surface of the parent metal, locally inducing the metal transport and ceramic growth phenomenon of the previously cited related patent application EP-A- 155 831 from only those portions of the parent metal surface so selectively doped. This offers the advantage that ceramic growth can be achieved in one or more selective areas of the parent metal's surface rather than indiscriminately, making the process more efficiently applied, for example, to the growth of ceramic plates (by doping only one surface of a parent metal plate). The present invention also offers the advantage of being able to create growth in parent metals without the necessity of alloying, rendering the process feasible for application to commercially available wrought metals and alloys which otherwise would not have appropriately doped compositions.

In the present invention, a parent metal is selectively doped by applying a layer of one or more dopants to its exposed surface(s). Such layer may be applied by painting, dipping, silk screening, evaporating, sputtering, etc., and may include either organic or inert inorganic binders, vehicles, thickeners, etc. The doped parent metal is then exposed to an oxdizing environment above the melting point of the parent metal.

Under such process conditions, the liquid parent metal oxidizes from its surface outward, progressing toward the oxidizing atmosphere by wicking along channels which form in place of high energy grain boundaries in the otherwise impermeable reaction product structure. New material is continually formed by reaction of the liquid metal with the oxidizing vapor, thus "growing" a ceramic structure which is the reaction product of the metal and the oxidizing vapor and is interconnected primarily along low energy grain boundaries. The resulting material also contains some or all of the constituents of the parent metal or alloy dispersed in metallic form throughout the microstructure in either interconnected or isolated arrangement, and present to a greater or lesser degree depending upon process conditions as shall be elaborated further herein. The uniformly dispersed metallic material and dense nature of the reaction product/metal structure appear to account for the high fracture toughness and strength of the resultant ceramics.

The materials of this invention can be grown with substantially uniform properties throughout their cross-section to thicknesses heretofore unachievable by conventional processes for producing dense ceramic structures. The prooess which yields these materials also obviates the high costs associated with fine uniform powder preparation and pressing techniques, characteristic of conventional ceramic production methods.

A detailed description of the invention and of the preferred embodiments thereof follows.

In Applicant's related application EP-A- 155 831 (not prepublished), there are described novel ceramic materials which are produced by creating an unusual surface energy relationship between an internally doped or alloyed parent metal and its oxidation reaction product so as to produce a surprising oxidation behavior of the metal. Such metal when exposed to an oxidizing environment at temperatures substantially in excess of the melting point of the parent metal alloy oxidizes outwardly from the surface exposed to an oxidizing atmosphere, progressing towards the oxidizing atmosphere apparently by migration along grain boundaries through its dense, gas-impermeable structure. Thus, ceramic materials are literally "grown" to desired thicknesses heretofore believed unachievable with conventional ceramic processing techniques.

The present invention herein relates to the production of the same genre of ceramic materials disclosed in the related application EP-A- 155 831. The present invention broadly resides in the discovery that a parent metal can be surface-coated with dopants to achieve the same surprising oxidation behavior and resultant growth of ceramic materials. Thus, in accordance with the present invention, a method is disclosed whereby self-supporting ceramic materials can be produced by applying a layer of at least one dopant material to a surface of the parent metal and thereby subjecting the parent metal having the dopant layer thereon to elevated temperatures and in an oxidizing environment so as to produce the novel oxidation behavior described above.

The present invention, therefore, obviates the need for alloying the dopant materials into the parent metal prior to processing and thus, the present invention presents a distinct advantage with respect to processing costs and techniques. That is, with the present invention, there no longer exists the need to initially alloy a parent metal with the requisite amounts of dopant materials in order to make any adjustments in relative surface energy relationship between molten metal and oxidation reaction product in

4

order to produce surprising oxidation behavior and resulting growth of the self-supporting ceramic structure as is the situation with the invention described in the related application. The elimination of processing steps to alloy a parent metal with the dopant materials thus saves valuable process resources thereby contributing to potentially lower costs associated with the manufacture of the ceramic bodies. Moreover, the amounts of dopant materials to achieve the oxidation and growth phenomena described in the related application are significantly less when such dopant materials are surface-applied to the parent metal in accordance with the method of the present invention. The method of the present invention also lends itself to selective growth of the ceramic structure by localized placement of the dopant material on a surface of the parent metal. Thus, the present invention provides a method whereby the growth of the ceramic material can be controlled in dependance upon the localized placement of the dopant material upon the parent metal surface.

Further aspects and advantages of the present invention will become more clear from the detailed description of the preferred exemplary embodiments thereof which follow.

Reference will be hereinafter made to the accompanying drawings where:

FIGURE 1 is a photograph of a section of the resulting monolithic ceramic body produced in accordance with Example 8;

FIGURE 2 is a photograph respectively showing a top view of the localized ceramic body formed in accordance with Example 9; and

FIGURE 3 is a photomicrograph showing the microstructure of the ceramic body produced in accordance with Example 11.

As indicated above, the present invention resides in the discovery that similar oxidation behavior to that described in the related application EP-A- 155 831 is achievable by application of at least one dopant material to a selected portion of the surface of the parent metal, in cases where one or more dopants are necessary to create the preferred wetting of the parent metal with respect to certain of its oxidation reaction product grain boundaries.

In a particularly preferred embodiment of the present invention an aluminum parent metal is utilized in conjunction with a binary doping system comprising an initiator dopant and an accelerator dopant applied externally to a selected portion of the parent metal surface. The initiator and accelerator dopants, in the case of aluminum, are a source of magnesium and a source of a Group 4B element other than carbon, respectively. Both the initiator and accelerator dopants need not be applied to the external surface of the parent metal and thus should one of the dopants be internally alloyed with the parent metal, the other dopant can be externally applied to the parent metal surface to achieve the growth of the ceramic structure. Additonally, concentration deficiencies of the appropriate accelerator and/or initiator dopants within the parent alloy may be augmented by externally applied dopants to yield optimal growth kinetics for the ceramic structure. In the case of aluminum, there are no common commercial alloys which are optimally constituted with respect to internally alloyed dopant concentrations. It has been found that such alloys may be adjusted to optimal dopant concentration by applying either initiator or accelerator dopants, or both, externally to achieve maximized growth kinetics.

Preferably, the initiator and accelerator dopants are applied to a portion of a surface of the parent metal as a uniform coating thereon. Surprisingly, the quantity of the accelerator dopant does not appear to have either upper or lower limits (as long as the accelerator dopant is present) but it appears that by increasing the quantity of accelerator dopant the reaction time necessary to produce the ceramic structure is decreased. For example, when utilizing silicon in the form of silicon dioxide as the accelerator dopant, quantities as low as .0001g Si/g aluminum together with the initiator dopant produce the ceramic structure growth phenomenon when air or oxygen is employed as oxidant.

Unlike the accelerator dopant, the quantities of externally applied dopant which are necessary to achieve the growth phenomenon on an undoped parent metal appear to hale a lower limit but again no observed upper limit. Thus, to achieve growth of the ceramic structure from an aluminum-based parent metal using air as oxidant, the initiator dopant in the form of MgO should preferably be present in an amount greater than 0.0005 gram of initiator per gram of parent alloy and greater than 0.005 gram per square centimeter of parent alloy surface upon which the MgO is applied.

In the case of employing aluminum or its alloys as the parent metal and air or oxygen as the oxidant in the process of the present invention, the appropriate amounts of binary dopants (initiator and accelerator) are applied to at least a portion of a surface of the parent metal, and the parent metal is then placed in a crucible or other refractory container with the metal surface exposed to an oxidizing atmosphere. The parent metal is then heated within a furnace to elevate the temperature thereof in the region typically between about 1000°C to about 1450°C, or more preferred, between about 1100°C to about 1350°C, whereupon the parent metal migration begins to occur through the oxide skin enveloping the parent metal. The resultant continual exposure of the parent metal allows the progressive oxidation of a thicker and thicker polycrystalline oxide skin with a microfine network of parent metal along substantially all of the high angle grain boundaries of the oxide structure thus formed. The oxide structure grows at a constant rate (that is, substantially constant thickness growth rate over time), provided sufficient air (or oxidant atmosphere) interchange is allowed in the furnace to keep a relatively constant source of oxidant therein. Interchange of oxidant atmosphere, in the case of air, can be conveniently provided by vents in the furnace. Growth continues until at least one of the following occurs: 1) all of the parent metal is consumed; 2) the oxidant atmosphere is replaced by a non-oxidant atmosphere, is depleted of oxidant, or evacuated; or 3) the furnace temperature is altered so as to be substantially outside the reaction temperature envelope (i.e. substantially outside the region between 1000°C and 1450°C).

Preferably, the dopant materials (initiator and accelerator) are applied as powders to the surface of the parent metal. One particularly preferred method of applying the dopants to the parent metal surface is to utilize a liquid suspension of the dopants in a water/organic binder mixture sprayed onto the parent metal surface in order to obtain an adherent coating which facilitates handling of the doped parent metal prior to processing.

It has also been surprisingly discovered that the source of accelerator dopant can be provided by placing a rigid body consisting essentially of the accelerator dopant in contact with a portion of the parent metal surface. For example, it has been discovered that glass containing silicon can be overlayed onto a portion of the parent metal surface upon which the initiator dopant had been previously applied. Thus upon subjecting the glass-overlayed parent metal to an oxidizing environment in the temperature range between about 1000°C to about 1450°C, growth of the ceramic body occurs.

The following non-limiting examples further exemplify the method of the present invention. Each example below uses air as the oxidizing atmosphere at ambient pressure supplied by convection through a furnace vent.

## EXAMPLE 1

Commercially pure (1100 alloy) aluminum was examined at temperatures in the range 1100°C to 1450°C to determine the effect that temperature and the surface application of doping material of oxides containing magnesium initiator and silicon accelerator would have with respect to growth of the ceramic body.

In each trial, sheets of the aluminum alloy 5,08 cm (two inches) wide by 22,86 cm (nine inches) long by approximately 0,48 cm (three-sixteenths of an inch) thick and weighing approximately 100 g were prepared for processing. These sheets were embedded in a particulate bed of aluminum oxide with the nine inch face of the sheet exposed substantially flush to the surface of the bed. The exposed surface was covered with a small quantity (one gram) of finely divided magnesium oxide powder followed by a similar quantity (one gram) of silicon dioxide powder so as to uniformly cover the expected growth surface.

For each trial, the nominal cycle in a furnace allowing entry of atmospheric air was as follows:

| Elapsed Time | Temperature (°C) |
|---|---|
| 0 - 5 hours | 30 to setpoint temperature |
| 5 - 29 hours | at setpoint temperature |
| 29 - 34 hours | setpoint to roughly 600 |
| 34 + hours | removed from furnace |

The diagnostic for the various samples was visual examination and weight gain measurement of the total crucible and load. As used herein, "weight gain" is meant to refer to the ratio of the total change in weight of the refractory vessel/aluminum oxide bed/ingot prior to and after the furnace cycle noted above, to the original weight of the parent metal, the weight gain being expressed in gram per gram. Where relative complete conversion of the aluminum alloy into the ceramic material was found, the weight gain is in the order of 0.89 gram per gram of aluminum parent metal (equivalent to the complete conversion of the aluminum to $Al_2O_3$), with any difference allowing for residual unreacted aluminum in the parent alloy, plus a few percent (e.g., 15%) of an included metallic phase in the resultant product. The weight gains of the above processed load, without correction for removal of moisture from the bed or the crucibles or other experimental errors, at selected furnace temperatures are listed in Table 1 below.

## TABLE 1

| Setpoint Temperature | Weight Gain |
|---|---|
| 1100°C | 0.00 |
| 1125°C | 0.00 |
| 1150°C | 0.15 |
| 1175°C | 0.57 |
| 1200°C | 0.68 |
| 1225°C | 0.46 |
| 1275°C | 0.56 |
| 1300°C | 0.44 |
| 1325°C | 0.27 |
| 1350°C | 0.34 |
| 1375°C | 0.13 |
| 1400°C | 0.19 |
| 1425°C | 0.14 |

EXAMPLE 2

To determine whether the order of placement of magnesium oxide and silicon oxide on the exposed surface altered in a substantial way the processing into the ceramic body of the present invention, experiments were conducted in the manner described above with the silicon dioxide applied first, followed by the magnesium oxide. The resulting ceramic bodies and the weight gains were substantially identical to those of the previously described series of Example 1, with weight gains tabulated in Table 2 below.

## TABLE 2

| Setpoint Temperature | Weight Gain |
|---|---|
| 1100°C | 0.00 |
| 1150°C | 0.04 |
| 1200°C | 0.55 |
| 1250°C | 0.53 |
| 1300°C | 0.39 |
| 1350°C | 0.20 |

EXAMPLE 3

To determine if the initiator and the accelerator if applied together would allow formation of a ceramic body, two grams of a 1:1 mixture by weight of magnesium oxide and silicon oxide were applied to the parent metal surface in a manner identical to that described in Example 1. The weight gains of this Example are given in Table 3.

## TABLE 3

Weight gain data and setpoint temperature for samples processed with a mixture of magnesium oxide and silicon dioxide applied to the exposed parent metal surface.

| Setpoint Temperature | Weight Gain |
|---|---|
| 1200°C | 0.75 |
| 1250°C | 0.53 |
| 1300°C | 0.43 |

EXAMPLE 4

To determine the effect of processing described above on 1100-alloy aluminum without benefit of initiator or added accelerator, samples were processed in the manner described above but without any material applied to the exposed surface. No growth of the desired ceramic material was observed at setpoint temperatures between 1100 and 1350° C.

EXAMPLE 5

To determine the effect that external doping with compounds containing magnesium initiator and other Group 4B elements as an accelerator would have with respect to growth of the ceramic body of the present invention, experiments were conducted in a manner identical to those described in Example 1, but with external application of a small quantity (one gram) of magnesium oxide and two and one-half grams of tin oxide to the exposed surface. Weight gain data using tin oxide as the accelerator dopant are tabulated in Table 5A below.

In an identical manner, experiments were performed with external application of a small quantity (one gram) of magnesium oxide, followed by 1.7 grams of germanium dioxide. Weight gain data using germanium dioxide as the accelerator dopant are tabulated in Table 5B.

## TABLE 5A

Weight gain data and setpoint temperature for samples processed with addition of tin oxide accelerator and magnesium oxide initiator to the exposed surface.

| Setpoint Temperature | Weight Gain |
|---|---|
| 1150°C | 0.02 |
| 1200°C | 0.78 |
| 1225°C | 0.80 |
| 1250°C | 0.83 |
| 1275°C | 0.81 |
| 1300°C | 0.77 |
| 1350°C | 0.45 |

## TABLE 5B

Weight gain data and setpoint temperature for samples processed with addition of germanium oxide accelerator and magnesium oxide initiator to the exposed surface.

| Setpoint Temperature | Weight Gain |
|---|---|
| 1200°C | 0.77 |
| 1250°C | 0.50 |

EXAMPLE 6

To determine the effect that external doping with other compounds containing magnesium would have with respect to growth of the ceramic, experiments were conducted in a manner identical to that described in Example 1, but with addition of two grams of magnesium aluminate spinel ($MgAl_2O_4$) and one gram of silicon dioxide to the surface of the alloy. For these experiments, the furnace time at setpoint temperature was 36 hours. Weight gain data are tabulated in Table 6.

## TABLE 6

Weight gain data and setpoint temperature for samples processed with addition of magnesium aluminate spinel and silicon dioxide to the exposed surface:

| Setpoint Temperature | Weight Gain |
|---|---|
| 1100°C | 0.00 |
| 1125°C | 0.01 |
| 1175°C | 0.29 |
| 1225°C | 0.22 |
| 1275°C | 0.15 |
| 1325°C | 0.20 |
| 1375°C | 0.09 |

EXAMPLE 7

To demonstrate the use of one externally applied dopant in combination with the other dopant internally alloyed with the parent metal, six aluminum/magnesium alloys having between 0.5 and 10% internal magnesium initiator dopant by weight were processed with externally applied silicon dioxide over a range of setpoint temperatures.

In each trial, a cylindrical aluminum/magnesium alloy ingot 2.54 cm (one inch) long and 2.54 cm (one inch) in diameter was prepared by casting from a melt at 850°C. The cylinder was embedded in 160 μm (90 mesh) aluminium oxide refractory grain within a suitable refractory crucible. A sawed face of the ingot was exposed and was placed substantially flush to the surface of the aluminum oxide. Upon this surface was distributed 0:05 g of silicon dioxide in the form of < 105 μm (-140 mesh) powder to provide the accelerator species. For each trial the nominal furnace cycle was as follows:

| Elapsed Time | Temperature (°C) |
|---|---|
| 0 - 4 hours | 30 to Setpoint |
| 4 - 16 hours | Setpoint |
| 16 - 20 hours | Setpoint to 600 |
| 20 + hours | Removed from furnace |

For each alloy, weight gain was determined in the manner previously defined. Results are tabulated in Table 7.

## TABLE 7

Weight gain and setpoint temperature for a series of Al/Mg alloys with addition of silicon dioxide to the exposed surface.

| Alloy Composition | Setpoint °C | Weight Gain |
|---|---|---|
| 0% Mg/Balance Al | 1150 | 0.004 |
| 0% Mg " | 1200 | 0.004 |
| 0% Mg " | 1250 | 0.002 |
| 0% Mg " | 1300 | 0.01 |
| 0% Mg " | 1350 | 0.01 |
| 0.5% Mg/Balance Al | 1100 | 0.05 |
| 0.5% Mg " | 1150 | 0.14 |
| 0.5% Mg/Balance Al | 1200 | 0.22 |
| 0.5% Mg " | 1250 | 0.15 |
| 0.5% Mg " | 1300 | 0.47 |
| 0.5% Mg " | 1350 | 0.32 |
| 0.5% Mg " | 1400 | 0.06 |
| 1% Mg/Balance Al | 1100 | 0.05 |
| 1% Mg " | 1150 | 0.09 |
| 1% Mg " | 1200 | 0.19 |
| 1% Mg " | 1250 | 0.76 |
| 1% Mg " | 1300 | 0.30 |
| 1% Mg " | 1350 | 0.17 |
| 1% Mg " | 1400 | 0.11 |
| 2% Mg/Balance Al | 1100 | 0.02 |
| 2% Mg " | 1150 | 0.13 |
| 2% Mg " | 1200 | 0.26 |
| 2% Mg " | 1250 | 0.25 |

| | | | |
|---|---|---|---|
| 2% Mg | " | 1300 | 0.42 |
| 2% Mg | " | 1350 | 0.06 |
| 2% Mg | " | 1400 | 0.10 |
| | | | |
| *2.5% Mg | | 1100 | 0.05 |
| 2.5% Mg | | 1150 | 0.13 |
| 2.5% Mg | | 1200 | 0.22 |
| 2.5% Mg | | 1250 | 0.79 |
| 2.5% Mg | | 1300 | 0.62 |
| 2.5% Mg | | 1350 | 0.06 |
| 2.5% Mg | | 1400 | 0.10 |
| | | | |
| 3% Mg/Balance Al | | 1100 | 0.12 |
| 3% Mg | " | 1150 | 0.13 |
| 3% Mg | " | 1200 | 0.21 |
| 3% Mg | " | 1250 | 0.72 |
| 3% Mg | " | 1300 | 0.33 |
| 3% Mg | " | 1350 | 0.09 |
| 3% Mg | " | 1400 | 0.13 |
| | | | |
| 5% Mg/Balance Al | | 1100 | 0.11 |
| 5% Mg | " | 1150 | 0.09 |
| 5% Mg | " | 1200 | 0.25 |
| 5% Mg | " | 1250 | 0.79 |
| 5% Mg | " | 1300 | 0.47 |

---

* The 2.5% magnesium alloy was a commercially available aluminum alloy (5052) having the following constituents:

| Element | Concentration (by weight) |
|---|---|
| Fe | 1% |
| Cr | 0.3% |
| Si | 0.1%-0.2% |
| Cu | 0.05% |
| Zn | 0.01% |
| Al | Balance |

| | | | | |
|---|---|---|---|---|
| 5% Mg | " | | 1350 | 0.05 |
| 5% Mg | " | | 1400 | 0.23 |
| 10% Mg/Balance Al | | | 1100 | 0.03 |
| 10% Mg | " | | 1150 | 0.21 |
| 10% Mg | " | | 1200 | 0.52 |
| 10% Mg | " | | 1250 | 0.72 |
| 10% Mg | " | | 1300 | 0.68 |
| 10% Mg | " | | 1350 | 0.57 |
| 10% Mg | " | | 1400 | 0.46 |

## EXAMPLE 8

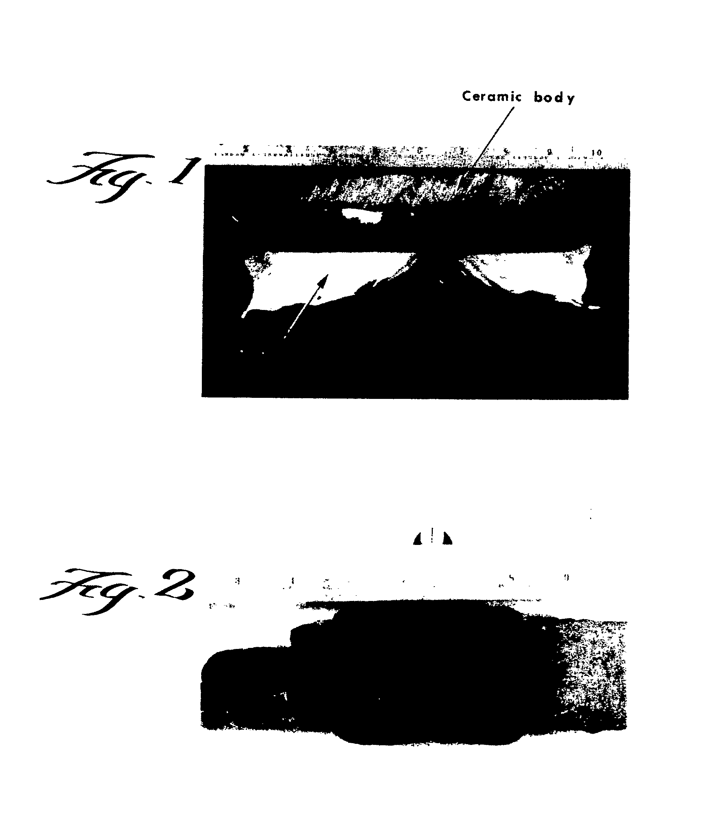

To obtain a large monolithic sample of the ceramic body of the present invention, a group of four 22,86 cm (nine inch) by 20,32 cm (eight inch) by 1.27 cm (one half inch) plates of commercially available 5052 aluminum alloy having 2.5% Mg internal initiator dopant and less than 0.2% of known accelerator dopants were prepared. These were grouped as an assembly 5,08 cm (two inches) high, wrapped in aluminum foil of less than 0.5% internal initiator and accelerator dopants, and embedded in a suitable refractory grain confined within a refractory vessel. The upper 20.32 cm (eight inch) by 22,86 cm (nine inch) surface was bare of foil, and twelve grams of the accelerator dopant silicon dioxide dispersed in a solution of polyvinyl alcohol and water was applied to the exposed surface followed by the application of four grams of powdered silicon dioxide material. The ensemble was processed at a setpoint temperature of 1125°C for 160 hours, allowing ten hours for the furnace to achieve setpoint and twenty hours to cool before removal of the load from the furnace. After processing, the weight gain was approximately 0.40 from an initial weight of 6500 g of parent alloy. A section of the resulting monolithic ceramic body, which measured roughly 25.4 cm (ten inches) by 22.86 cm (nine inches) by 2.54 cm (one inch), is illustrated in FIGURE 1.

## EXAMPLE 9

To determine the effect that localized surface application of the accelerator dopant had with respect to formation of the ceramic body, a sample was processed in the manner described in Example 8, using a 22.86 cm (nine inch) by 5.08 cm (two inch) by 1.27 cm (one half inch) sample of commercially available 5052 aluminum alloy containing 2.5% magnesium as initiator dopant. Approximately 2.0 grams of silicon dioxide dispersed in a polyvinyl alcohol and water solution was applied to the center 7,62 cm (three inch) by 5.08 cm (two inch) portion of the 22.86 cm (nine inch) by 5.08 cm (two inch) exposed face to serve as the accelerator dopant. The sample was processed at a setpoint temperature of 1125°C for 48 hours, allowing five hours for the furnace to reach process temperature and five hours to cool for removal from the furnace. The weight gain was 0.16 and the resulting ceramic body, which grew predominantly from the externally doped surface portion of the parent alloy, is shown in FIGURE 2.

## EXAMPLE 10

To determine the effect of external application of the accelerator dopant in a non-powdered form, a sample of commercial aluminum alloy containing 2.5% of the initiator dopant Mg was prepared for processing in the manner described in Example 9. A solid plate of the accelerator dopant silicon dioxide weighing eight grams and measuring one millimeter thick by 5.08 cm (two inches) wide by 7,62 cm (three inches) long was placed in the center region of the 5.08 cm (two inch) by 22,86 cm (nine inch) exposed surface of the parent alloy. After processing at a setpoint temperature of 1125°C for forty-eight hours, allowing five hours for the furnace to reach setpoint temperature and five hours to cool for removal from the furnace, the weight gain was 0.12 with the growth of the ceramic body confined to the doped, center region of the parent alloy.

EXAMPLE 11

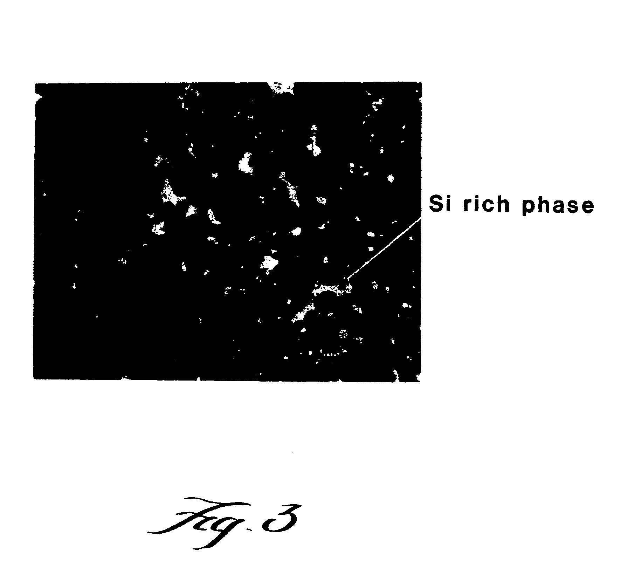

To determine the effect of a large amount of silicon dioxide accelerator on the formation of the ceramic body of the present invention, two samples each 5.08 cm (two inches) by 22.86 cm (nine inches) by 1,27 cm (one-half inch) of a commercial alloy (6061) having 1% of the initiator dopant magnesium and 0.6%, of the accelerator dopant Si were prepared as an ensemble 2.54 cm (one inch) thick and were embedded in a suitable refractory grain in a refractory vessel. One gram of the accelerator dopant silicon dioxide bonded with polyvinyl alcohol was coated onto the exposed 5.08 cm (two inch) by 22,86 cm (nine inch) surface, and an additional sixty-five grams of powdered silica were applied in a 0,64 cm (one-quarter inch) layer over this surface, which was exposed to the furnace atmosphere during processing. After processing at 1310°C for 72 hours, allowing five hours for the furnace to reach temperature and ten hours for the sample to cool for removal from the furnace, the weight gain was 0.25, indicating significant growth of the desired ceramic body in the presence of a large amount of the accelerator dopant, silicon dioxide. The microstructure of the resulting material was as shown in FIGURE 3. The metallic phase of the resulting material was highly enriched with elemental silicon, as indicated in the FIGURE.

EXAMPLE 12

To determine the effect of small quantities of externally applied accelerator dopant on the growth of the ceramic body of the present invention, experiments were performed in the manner of Example 9 using externally applied silicon dioxide in amounts in the range zero grams to 1.0 grams applied in powdered form to the surface of 5.08 cm (two inch) by 22,86 cm (nine inch) by 1,27 cm (one half inch) thick samples of the commercial alloy containing 2.5% of the initiator dopant Mg. The furnace setpoint was 1125°C and processing time was 48 hours at setpoint, allowing five hours for the furnace to reach setpoint and five hours to cool for removal from the furnace. Weight gain was negligible (0.015) for a sample with no silicon dioxide accelerator applied to the surface, and was 0.16 to 0.36 for samples processed with 0.025 to 0.5 g of externally applied accelerator dopant oxide.

**Claims**

1. A method for producing a self-supporting ceramic structure by oxidation of a liquid-phase parent metal with a vapor-phase oxidizing environment and formation of an oxidation reaction product which comprises (1) a ceramic phase consisting of the oxidation reaction product of said parent metal with the vapor-phase oxidant, and (2) a metallic phase consisting of one or more non-oxidized constituents of said parent metal, **characterized** in that the method comprises

   (a) applying a layer of dopant material to at least one portion of a surface of a parent metal,

   (b) placing the parent metal having the layer of dopant material applied thereto in a suitable refractory container with the parent metal surface carrying the layer of dopant material exposed to the oxidizing environment,

   (c) heating the parent metal having the layer of dopant material applied thereto to a temperature above the melting point of the parent metal but below the melting point of its oxidation reaction product to render the parent metal in a liquid-phase and, at said temperature,

   (d) reacting said liquid-phase parent metal with said vapor-phase oxidant to form said oxidation reaction product and

   (e) maintaining at least one portion of the surface of the oxidation reaction product in contact with said oxidant to draw molten metal through the oxidation reaction product towards the oxidant to form an oxidation reaction product within and beyond the layer of dopant material, and

   (f) continuing said reaction for a time sufficient to produce said ceramic structure.

2. A method as claimed in claim 1, wherein the oxidizing environment comprises oxygen, nitrogen, a halogen, carbon, boron, selenium, tellurium or combinations thereof.

3. A method as claimed in claims 1 or 2, wherein the oxidizing environment comprises air.

4. A method as claimed in claims 1, 2 or 3, wherein the parent metal comprises aluminum or an aluminum alloy.

14

**5.** A method as claimed in any one of claims 1 to 4, wherein a further amount of the dopant material is also present as a constituent of the parent metal.

**6.** A method as claimed in any one of the preceding claims, wherein at least two dopant materials are utilized, and at least one of said dopants is the dopant material contained in the layer of dopant material applied to at least a portion of a surface of the parent metal.

**7.** A method as claimed in claim 6, wherein the layer of dopant material is applied as at least one layer including the first and second dopant material.

**8.** A method as claimed in claim 6, wherein a first layer including a first dopant is first applied to the surface and then a second layer including a second dopant is subsequently applied.

**9.** A method as claimed in claim 6, wherein a layer including a first dopant is applied to the surface of a parent metal containing the second dopant alloyed in the parent metal.

**10.** A method as claimed in any one of claims 6 to 9, wherein one of the first or second dopant materials comprises a source of magnesium.

**11.** A method as claimed in claim 10, wherein said source of magnesium comprises at least one of elemental magnesium, $MgO$ and $MgAl_2O_4$ and, when $MgO$ is utilized as said source of magnesium, said $MgO$ is present in an amount greater than 0.0005 g $MgO$ per g of parent metal and greater than 0.005 g $MgO$ per $cm^2$ of parent metal surface.

**12.** A method as claimed in any one of claims 6 to 11, wherein the other of said first and second dopant materials comprises at least a source of a group 4B element other than carbon.

**13.** A method as claimed in claim 12, wherein the source of group 4B elements comprises at least one of elemental silicon, silicon dioxide, tin oxide and germanium oxide.

**14.** A method as claimed in claims 12 or 13, wherein the source of group 4B elements is silicon dioxide present in an amount greater than 0.0001 g Si per g aluminum as parent metal.

**15.** A method as claimed in claim 13, wherein the silicon-containing dopant is applied to the parent metal as a sheet of silicon-containing glass overlaid on said exposed surface of the parent metal.

**16.** A method as claimed in any one of claims 1 to 15, wherein the temperature of the parent metal maintained in step (e) is a temperature within the range of from 1000°C to 1450°C.

**17.** A method as claimed in claim 16, wherein said temperature is in the range of from 1000°C to 1350°C.

**18.** A method as claimed in any one of the preceding claims, wherein said refractory container includes a bed of suitable refractory grain.

**19.** A self-supporting ceramic structure produced by a method as claimed in any one of the preceding claims.

**Revendications**

**1.** Procédé de production d'une structure céramique auto-porteuse par oxydation d'un métal-mère en phase liquide avec un milieu oxydant en phase vapeur et formation d'un produit réactionnel d'oxydation qui comprend (1) une phase céramique constituée du produit de réaction d'oxydation dudit métal-mère avec l'oxydant en phase vapeur et (2) une phase métallique composée d'un ou plusieurs constituants non oxydés dudit métal-mère, procédé caractérisé en ce qu'il consiste

(a) à appliquer une couche d'une matière dopante sur au moins une portion d'une surface d'un métal-mère,

(b) à mettre en place le métal-mère portant la couche de matière dopante appliquée dans un récipient réfractaire convenable, la surface du métal-mère portant la couche de matière dopante

EP 0 169 067 B1

étant exposée au milieu oxydant,

(c) à chauffer le métal-mère portant la couche de matière dopante appliquée à une température au-dessus du point de fusion du métal-mère mais au-dessous du point de fusion de son produit réactionnel d'oxydation pour rendre le métal-mère en phase liquide et, à ladite température,

(d) à faire réagir le métal-mère en phase liquide avec ledit oxydant en phase vapeur pour former ledit produit réactionnel d'oxydation et

(e) à maintenir au moins une portion de la surface du produit réactionnel d'oxydation au contact dudit oxydant pour faire passer du métal fondu à travers le produit réactionnel d'oxydation vers l'oxydant de manière à former un produit réactionnel d'oxydation à l'intérieur et au-delà de la couche de matière dopante, et

(f) à poursuivre la réaction pendant une durée suffisante pour produire ladite structure céramique.

2. Procédé suivant la revendication 1, dans lequel le milieu oxydant comprend de l'oxygène, de l'azote, un halogène, du carbone, du bore, du sélénium, du tellure ou des mélanges de ces éléments.

3. Procédé suivant la revendication 1 ou 2, dans lequel le milieu oxydant comprend de l'air.

4. Procédé suivant les revendications 1, 2 ou 3, dans lequel le métal-mère comprend de l'aluminium ou un alliage d'aluminium.

5. Procédé suivant l'une quelconque des revendications 1 à 4, dans lequel une quantité additionnelle de matière dopante est aussi présente comme constituant du métal-mère.

6. Procédé suivant l'une quelconque des revendications précédentes, dans lequel au moins deux matières dopantes sont utilisées et au moins l'une desdites matières dopantes est la matière dopante contenue dans la couche de matière dopante appliquée à au moins une portion d'une surface du métal-mère.

7. Procédé suivant la revendication 6, dans lequel la couche de matière dopante est appliquée sous forme d'au moins une couche comprenant les première et seconde matières dopantes.

8. Procédé suivant la revendication 6, dans lequel une première couche renfermant une première matière dopante est tout d'abord appliquée à la surface, et une seconde couche renfermant une seconde matière dopante est appliquée ensuite.

9. Procédé suivant la revendication 6, dans lequel une couche comprenant une première matière dopante est appliquée à la surface d'un métal-mère contenant la seconde matière dopante alliée dans le métal-mère.

10. Procédé suivant l'une quelconque des revendications 6 à 9, dans lequel l'une des première et seconde matières dopantes comprend une source de magnésium.

11. Procédé suivant la revendication 10, dans lequel ladite source de magnésium comprend au moins l'un des composants tels que du magnésium élémentaire, Mgo et $MgAl_2O_4$ et, lorsque MgO est utilisé comme source de magnésium, ledit MgO est présent en une quantité supérieure à 0,0005 g de Mgo par g de métal-mère et supérieure à 0,005 g de Mgo par $cm^2$ de surface de métal-mère.

12. Procédé suivant l'une quelconque des revendications 6 à 11, dans lequel l'autre des première et seconde matières dopantes comprend au moins une source d'un élément du Groupe 4B autre que le carbone.

13. Procédé suivant la revendication 12, dans lequel la source d'éléments du Groupe 4B comprend au moins l'un des composants tels que le silicium élémentaire, le dioxyde de silicium, l'oxyde d'étain et l'oxyde de germanium.

14. Procédé suivant la revendication 12 ou 13, dans lequel la source d'éléments du Groupe 4B est du dioxyde de silicium présent en une quantité supérieure à 0,0001 g de Si par g d'aluminium comme métal-mère.

16

15. Procédé suivant la revendication 13, dans lequel le dopant contenant du silicium est appliqué au métal-mère sous forme d'une feuille de verre contenant du silicium revêtant la surface exposée du métal-mère.

16. Procédé suivant l'une quelconque des revendications 1 à 15, dans lequel la température du métal-mère maintenue dans l'étape (e) est une température comprise dans la plage de 1000 à 1450° C.

17. Procédé suivant la revendication 16, dans lequel ladite température se situe dans la plage de 1000 à 1350° C.

18. Procédé suivant l'une quelconque des revendications précédentes, dans lequel le récipient réfractaire comprend un lit de matière réfractaire granulaire convenable.

19. Structure céramique auto-porteuse produite par un procédé suivant l'une quelconque des revendications précédentes.

**Patentansprüche**

1. Ein Verfahren zur Herstellung einer selbsttragenden keramischen Struktur durch Oxidation eines Flüssigphasen-Grundmetalls mit einer oxidierenden Dampfphasenumgebung und Bildung eines Oxidationsreaktionsprodukts, das aufweist (1) eine keramische Phase, die aus dem Oxidationsreaktionsprodukt des genannten Grundmetalls mit dem Dampfphasenoxidationsmittel besteht, und (2) eine metallische Phase, die aus einem oder mehreren nicht-oxidierten Bestandteilen des genannten Grundmetalls besteht, **dadurch gekennzeichnet,** daß das Verfahren umfaßt

   (a) das Aufbringen einer Schicht eines Dotierungsmaterials auf wenigstens einen Bereich einer Oberfläche eines Grundmetalls,

   (b) Anordnen des Grundmetalls mit der darauf aufgebrachten Schicht des Dotierungsmaterials in einem geeigneten feuerfesten Behälter, wobei die Grundmetalloberfläche, die die Schicht des Dotierungsmaterials trägt, der oxidierenden Umgebung ausgesetzt ist,

   (c) Erhitzen des Grundmetalls mit der darauf aufgebrachten Schicht an Dotierungsmaterial auf eine Temperatur oberhalb des Schmelzpunkts des Grundmetalls jedoch unterhalb des Schmelzpunkts seines Oxidationsreaktionsprodukts, um das Grundmetall in eine flüssige Phase zu überführen, und, bei der genannten Temperatur,

   (d) Umsetzen des genannten Flüssigphasen-Grundmetalls mit dem genannten Dampfphasenoxidationsmittel unter Bildung des genannten Oxidationsreaktionsprodukts und

   (e) In-Kontakt-Halten von wenigstens einem Bereich der Oberfläche des Oxidationsreaktionsprodukts mit dem genannten Oxidationsmittel, um schmelzflüssiges Metall durch das Oxidationsreaktionsprodukt zu dem Oxidationsmittel zu saugen, um ein Oxidationsreaktionsprodukt innerhalb und jenseits der Schicht des Dotierungsmaterials auszubilden, und

   (f) Fortsetzen der genannten Umsetzung für eine Zeit, die ausreicht, die genannte keramische Struktur zu erzeugen.

2. Verfahren nach Anspruch 1, worin die oxidierende Umgebung Sauerstoff, Stickstoff, ein Halogen, Kohlenstoff, Bor, Selen, Tellur oder Kombinationen davon umfaßt.

3. Verfahren nach den Ansprüchen 1 oder 2, worin die oxidierende Umgebung Luft umfaßt.

4. Verfahren nach den Ansprüchen 1, 2 oder 3, worin das Grundmetall Aluminium oder eine Aluminiumlegierung umfaßt.

5. Verfahren nach irgendeinem der Ansprüche 1 bis 4, worin eine weitere Menge des Dotierungsmaterials außerdem als ein Bestandteil des Grundmetalls vorhanden ist.

6. Verfahren nach irgendeinem der vorausgehenden Ansprüche, worin wenigstens zwei Dotierungsmaterialien verwendet werden und worin wenigstens eines der genannten Dotierungsmittel das Dotierungsmaterial ist, das in der Schicht aus Dotierungsmaterial enthalten ist, die auf wenigstens einen Bereich einer Oberfläche des Grundmetalls aufgebracht wird.

7. Verfahren nach Anspruch 6, worin die Schicht des Dotierungsmaterials als wenigstens eine Schicht aufgebracht wird, die das erste und das zweite Dotierungsmaterial enthält.

8. Verfahren nach Anspruch 6, worin eine erste Schicht, die ein erstes Dotierungsmittel enthält, zuerst auf die Oberfläche aufgebracht wird, und daß anschließend eine zweite Schicht aufgebracht wird, die ein zweites Dotierungsmittel enthält.

9. Verfahren nach Anspruch 6, worin eine Schicht, die ein erstes Dotierungsmittel enthält, auf die Oberfläche eines Grundmetalls aufgebracht wird, das das zweite Dotierungsmittel in das Grundmetall einlegiert enthält.

10. Verfahren nach irgendeinem der Ansprüche 6 bis 9, worin eines der ersten oder zweiten Dotierungsmaterialien eine Magnesiumquelle umfaßt.

11. Verfahren nach Anspruch 10, worin die genannte Magnesiumquelle wenigstens eines der Materialien elementares Magnesium, MgO und $MgAl_2O_4$ umfaßt und dann, wenn MgO als die genannte Magnesiumquelle verwendet wird, dieses MgO in einer Menge vorhanden ist, die größer ist als 0,0005 g MgO pro g Grundmetall und größer ist als 0,005 g MgO pro $cm^2$ der Grundmetalloberfläche.

12. Verfahren nach irgendeinem der Ansprüche 6 bis 11, worin das andere der beiden ersten und zweiten Dotierungsmaterialien wenigstens eine Quelle eines Elements der Gruppe 4B, ausgenommen Kohlenstoff, umfaßt.

13. Verfahren nach Anspruch 12, worin die Quelle für die Elemente der Gruppe 4B wenigstens eines der Materialien elementares Silicium, Siliciumdioxid, Zinnoxid und Germaniumoxid umfaßt.

14. Verfahren nach den Ansprüchen 12 oder 13, worin die Quelle für die Elemente der Gruppe 4B Siliciumdioxid ist, das in einer Menge von mehr als 0,0001 g Si pro g Aluminium als Grundmetall vorhanden ist.

15. Verfahren nach Anspruch 13, worin das Silicium enthaltende Dotierungsmittel auf das Grundmetall als ein Blatt aus einem siliciumhaltigen Glas aufgebracht wird, das auf die genannte ausgesetzte Oberfläche des Grundmetalls aufgelegt wird.

16. Verfahren nach irgendeinem der Ansprüche 1 bis 15, worin die Temperatur des Grundmetalls, die in Stufe (e) aufrechterhalten wird, eine Temperatur im Bereich von 1000° C bis 1450° C ist.

17. Verfahren nach Anspruch 16, worin die genannte Temperatur im Bereich von 1000° C bis 1350° C liegt.

18. Verfahren nach irgendeinem der vorausgehenden Ansprüche, worin der genannte feuerfeste Behälter ein Bett aus einem geeigneten feuerfesten körnigen Material enthält.

19. Eine selbsttragende keramische Struktur, die nach einem Verfahren hergestellt ist, wie es in irgendeinem der vorausgehenden Ansprüche beansprucht wird.

Fig. 1

Ceramic body

Fig. 2

Si rich phase

*Fig. 3*